# EUROPEAN PATENT APPLICATION

(11) **EP 4 667 534 A1**
(43) Date of publication of application: **24.12.2025**
(21) Application number: 24815843.8
(22) Date of filing: 28.05.2024
(51) Int. Cl.: C08L 101/00, C08L 55/02, C08L 51/04, C08L 25/12

(54) **RESIN COMPOSITION**

(30) Priority: 02.06.2023 KR 20230071351
(71) Applicant: LG Chem, Ltd., Seoul 07336 (KR)
(72) Inventor: JUNG, Yu Sung, Daejeon 34122 (KR); CHAI, Joo Byung, Daejeon 34122 (KR); KIM, Jong Beom, Daejeon 34122 (KR); JEON, Tae Young, Daejeon 34122 (KR); KIM, In Seok, Daejeon 34122 (KR); KIM, Yeong A, Daejeon 34122 (KR)
(74) Representative: Plasseraud IP
(86) International application number: PCT/KR2024/007268
(87) International publication number: WO 2024/248467

(57) **Abstract**

The present invention is to overcome the mechanical properties of recycled thermoplastic resins by maximizing the impact absorption efficiency of rubber particles by producing a diene graft copolymer composed of large-diameter rubber particles and small-diameter rubber particles during the production of a virgin resin.

## Description

### TECHNICAL FIELD

### Cross-reference to Related Applications

This application claims the benefit of Korean Patent Application No. 10-2023-0071351, filed on June 2, 2023, in the Korean Intellectual Property Office, the disclosure of which is incorporated herein in its entirety by reference.

### Technical Field

The present invention relates to a resin composition, and more particularly, to a resin composition including a graft copolymer composition containing a certain amount of a virgin resin in a recycled resin.

### BACKGROUND ART

A diene-based graft copolymer includes a diene-based rubber polymer and a shell including an aromatic vinyl-based monomer unit and a vinyl cyanide-based monomer unit grafted onto the diene rubber polymer. The diene-based graft copolymer has excellent impact resistance, chemical resistance, thermal stability, colorability, fatigue resistance, rigidity, and processability compared to conventional high-impact polystyrene (HIPS). Due to these characteristics, diene-based rubber thermoplastic resin molded products manufactured with the diene-based graft polymer are used as parts for automobile interior and exterior materials, office equipment, and various electrical and electronic products.

Meanwhile, in order for a thermoplastic resin composition to be certified as an eco-friendly product, a recycled resin must be contained. However, since the recycled resin has already been used, the impact resistance, tensile strength, chemical resistance, and thermal stability are lowered compared to a virgin resin, and when the resin is processed, foreign substances are exposed on the surface of a molded product, so that the recycled resin has been used as a raw material for low-grade materials. To overcome the limitations caused by these recycled resins, a technology is being developed to manufacture eco-friendly products by mixing virgin resins in a specific ratio.

However, in the case of recycled resins, the impact absorption efficiency of the rubber particles is reduced, so that the overall mechanical properties are lower than those of virgin resins, and thermoplastic resin molded products using recycled resins are experiencing limitations of reduced impact strength and rigidity.

### [Related art document]

### [Patent document]

(Patent document 0001) KR 10-2016-0144185 A

### DISCLOSURE OF THE INVENTION

### TECHNICAL PROBLEM

The present invention has been made to solve the problems of the prior art, and provides a recycled resin composition in which the mechanical properties are overcome by maximizing the impact absorption efficiency of rubber particles.

### TECHNICAL SOLUTION

(1) The present invention provides a resin composition including a recycled resin, a virgin graft copolymer composition, and a virgin non-graft copolymer, wherein the virgin graft copolymer composition includes: a first graft copolymer including a first conjugated diene-based polymer having an average particle diameter of 75 nm to 220 nm; and a second graft copolymer including a second conjugated diene-based polymer having an average particle diameter of 250 nm to 400 nm, and wherein the virgin graft copolymer composition includes the first conjugated diene-based polymer in an amount of 8 wt% to 50 wt% with respect to the total content of the first conjugated diene-based polymer and the second conjugated diene-based polymer.
(2) In the resin composition of (1) above, wherein with respect to 100 parts by weight of the content of the recycled resin, the virgin graft copolymer composition and the virgin non-graft copolymer, the recycled resin is contained in an amount of 70 parts by weight to 88 parts by weight.
(3) In any one among the resin composition of (1) or (2) above, with respect to 100 parts by weight of the recycled resin, the virgin graft copolymer composition and the virgin non-graft copolymer, the recycled resin is contained in an amount of 75 parts by weight to 85 parts by weight.
(4) In any one among the resin compositions of (1) to (3) above, with respect to 100 parts by weight of the recycled resin, the virgin graft copolymer composition and the virgin non-graft copolymer, the virgin graft copolymer is contained in an amount of 10 parts by weight to 18 parts by weight, and the virgin non-graft copolymer is contained in an amount of 1 part by weight to 15 parts by weight.
(5) In any one among the resin compositions of (1) to (4) above, the virgin graft copolymer composition includes the first conjugated diene-based polymer in an amount of 10 wt% to 43 wt% with respect to the total content of the first conjugated diene-based polymer and the second conjugated diene-based polymer.
(6) In any one among the resin compositions of (1) to (5) above, the average particle diameter of the first conjugated diene-based polymer is 78 nm to 208 nm.
(7) In any one among the resin compositions of (1) to (6) above, the recycled resin has an Izod impact strength of 7 kg·cm/cm to 12 kg·cm/cm as measured according to ASTM D256, and a flow index of 25 g/10 min to 35 g/10 min as measured according to ASTM D1238.
(8) In any one among the resin compositions of (1) to (7) above, the resin composition has an Izod impact strength of 17.0 kg·cm/cm or more as measured according to ASTM D256, a tensile strength of 395 kg/cm² or more as measured according to ASTM D638, and a flow index of 26.0 g/10 min or more as measured according to ASTM D1238 under the conditions of 220 °C and 10 kg.
(9) In any one among the resin compositions of (1) to (8) above, the non-graft copolymer includes an aromatic vinyl-based monomer unit and a vinyl cyanide-based monomer unit, and the first graft copolymer and the second graft copolymer further include an aromatic vinyl-based monomer unit and a vinyl cyanide-based monomer unit, respectively.
(10) In any one among the resin compositions of (1) to (9) above, when the cross-section of an impact specimen of the resin composition is observed using a TEM image, cavitation is observed inside the first graft copolymer and the second graft copolymer.
(11) The present invention provides a method for producing a resin composition, the method including: performing graft polymerization to prepare a virgin graft copolymer composition in the presence of a first conjugated diene-based polymer latex including a first conjugated diene-based polymer having an average particle diameter of 75 nm to 220 nm and a second conjugated diene-based polymer latex including a second conjugated diene-based polymer having an average particle diameter of 250 nm to 400 nm; and mixing the prepared virgin graft copolymer composition, a recycled resin, and a virgin non-graft copolymer, wherein the virgin graft copolymer is prepared by including the first conjugated diene-based polymer in an amount of 8 wt% to 50 wt% with respect to the total content of the first conjugated diene-based polymer and the second conjugated diene-based polymer.

### ADVANTAGEOUS EFFECTS

The resin composition according to the present invention has excellent impact strength, flow index, and tensile strength even if a recycled resin is contained.

### BRIEF DESCRIPTION OF THE DRAWINGS

FIG. 1 is a TEM image of a cross-section of an impact specimen of a thermoplastic resin composition according to reference example 1.
FIG. 2 is a TEM image of a cross-section of an impact specimen of a thermoplastic resin composition according to reference example 2.
FIG. 3 is a TEM image of a cross-section of an impact specimen of a thermoplastic resin composition according to comparative example 1.

### MODE FOR CARRYING OUT THE INVENTION

Hereinafter, the present invention will be described in more detail to help understand the present invention. At this time, the terms or words used in this specification and claims should not be interpreted as limited to their usual or dictionary meanings, and should be interpreted as meanings and concepts that conform to the technical idea of the present invention based on the principle that the inventor can appropriately define the concept of the term in order to explain his own invention in the best way.

The terms used in this specification are used only to describe exemplary examples and are not intended to limit the present invention. The singular expression includes plural expressions unless the context clearly indicates otherwise.

In the present invention, the term "monomer unit" may indicate a component, structure, or the substance itself derived from a monomer, and as a specific example, may mean a repeating unit formed in a polymer by a monomer that is introduced during polymerization of a polymer and participates in the polymerization reaction.

In the present invention, the 'weight average molecular weight' is generally measured by gel permeation chromatography (GPC). For example, after dissolving the target sample in a tetrahydrofuran (THF) solution, the 'weight average molecular weight' can be measured as a relative value to a standard sample (PS, standard polystyrene) through gel permeation chromatography (GPC).

The term "composition" used in the present invention includes a mixture of materials including the composition as well as reaction products and decomposition products formed from the materials of the composition.

In the present invention, "average particle diameter" may mean an arithmetic mean particle diameter in a particle diameter distribution measured by dynamic light scattering, specifically, an average particle diameter of scattering intensity. The average particle diameter of a conjugated diene-based polymer may be measured using a Nicomp 380 device (product name, manufacturer: PSS Nicomp).

### <Resin composition>

The present invention provides a resin composition.

A resin composition according to an example of the present invention includes a recycled resin, a virgin graft copolymer composition, and a virgin non-graft copolymer, wherein the virgin graft copolymer composition includes: a first graft copolymer including a first conjugated diene-based polymer having an average particle diameter of 75 nm to 220 nm; and a second graft copolymer including a second conjugated diene-based polymer having an average particle diameter of 250 nm to 400 nm, and wherein the virgin graft copolymer composition includes the first conjugated diene-based polymer in an amount of 8 wt% to 50 wt% with respect to the total content of the first conjugated diene-based polymer and the second conjugated diene-based polymer.

The inventors of the present invention have discovered that the mechanical properties of the recycled resin composition may be overcome by mixing a virgin resin containing a graft copolymer in the form of large-diameter rubber particles and small-diameter rubber particles in a specific ratio to the recycled resin, thereby completing the present invention.

Hereinafter, each component of a resin composition according to an example of the present invention will be described.

### 1. Recycled resin

According to an example of the present invention, a recycled resin is a component included in a resin composition to be certified as an eco-friendly product, and is a recycled product that processes and reuses already used resin or resin waste. Specifically, the recycled resin may mean that the resin waste is collected, crushed, washed, separated and sorted, and then processed and reused according to the intended use. The form of the recycled resin is not particularly limited.

According to an example of the present invention, the recycled resin may be at least one selected from the group consisting of recycled polyethylene, recycled polypropylene, recycled polyester, recycled polystyrene, recycled polyamide, recycled polycarbonate, a recycled diene-based graft polymer, and a recycled vinyl-based non-graft polymer.

According to an example of the present invention, the recycled resin may include a conjugated diene-based monomer unit, a vinyl cyanide-based monomer unit, and an aromatic vinyl-based monomer unit. The conjugated diene-based monomer unit may improve the impact resistance of the recycled resin. The vinyl cyanide-based monomer unit may improve the chemical resistance of the recycled resin. In addition, the aromatic vinyl-based monomer unit may improve the processability of the recycled resin.

According to an example of the present invention, the conjugated diene-based monomer for forming the conjugated diene-based monomer unit included in the recycled resin may be one or more selected from the group consisting of 1,3-butadiene, isoprene, chloroprene, and piperylene, and a specific example thereof may be 1, 3-butadiene.

According to an example of the present invention, the aromatic vinyl-based monomer for forming the aromatic vinyl-based monomer unit included in the recycled resin may be one or more selected from the group consisting of α-methyl styrene, α-ethyl styrene, p-methyl styrene, 2,4-dimethyl styrene, styrene, p-fluoro styrene, p-chloro styrene, and p-bromostyrene, and a specific example thereof may be styrene.

According to an example of the present invention, the vinyl cyanide-based monomer for forming the vinyl cyan-based monomer unit included in the recycled resin may be one or more selected from the group consisting of acrylonitrile, methacrylonitrile, (Z)-3-phenyl acrylonitrile, and α-chloro acrylonitrile, and a specific example thereof may be acrylonitrile.

According to an example of the present invention, the recycled resin may include a recycled graft copolymer including a conjugated diene-based polymer, an aromatic vinyl-based monomer unit, and a vinyl cyanide-based monomer unit. Specifically, the recycled graft copolymer included in the recycled resin may have a core-shell structure including a core including a conjugated diene-based polymer formed of the conjugated diene-based monomer unit, and a shell surrounding the core and formed of the aromatic vinyl-based monomer unit and the vinyl cyanide-based monomer unit.

According to an example of the present invention, the recycled resin may have an Izod impact strength of 7 kg·cm/cm to 12 kg·cm/cm as measured according to ASTM D256, and a flow index of 25 g/10 min to 35 g/10 min as measured according to ASTM D1238. If the above-described conditions are satisfied, it is possible to achieve a resin composition having a carbon reduction effect and minimum mechanical properties.

According to an example of the present invention, the resin composition may contain the recycled resin in an amount of 70 parts by weight to 88 parts by weight, with respect to 100 parts by weight of the recycled resin, the virgin graft copolymer, and the virgin non-graft copolymer, and, as a specific example, may contain 71 parts by weight or more, 72 parts by weight or more, 73 parts by weight or more, 74 parts by weight or more, or 75 parts by weight or more, and may also contain 87 parts by weight or less, 86 parts by weight or less, or 85 parts by weight or less. When the above-described range is satisfied, the impact strength, tensile strength, and flow index of the resin composition may all be improved.

### 2. Virgin graft copolymer composition

According to an example of the present invention, a virgin graft copolymer composition is a graft copolymer that has never been used before and is a component that improves the impact resistance of a thermoplastic resin composition.

According to an example of the present invention, the virgin graft copolymer composition may be a graft polymer including a conjugated diene-based polymer including a conjugated diene-based monomer unit as a rubber polymer and a shell including an aromatic vinyl-based monomer unit and a vinyl cyanide-based monomer unit grafted onto the conjugated diene-based polymer. The shell may include an aromatic vinyl-based monomer unit and a vinyl cyanide-based monomer unit that are not grafted onto the conjugated diene-based polymer.

According to an example of the present invention, the conjugated diene monomer for forming the conjugated diene-based monomer unit included in the virgin graft copolymer composition may be one or more selected from the group consisting of 1,3-butadiene, isoprene, chloroprene, and piperylene, and a specific example thereof may be 1,3-butadiene.

According to an example of the present invention, an aromatic vinyl-based monomer for forming the aromatic vinyl-based monomer unit included in the virgin graft copolymer composition may be one or more selected from the group consisting of α-methyl styrene, α-ethyl styrene, p-methyl styrene, 2,4-dimethyl styrene, styrene, p-fluoro styrene, p-chloro styrene, and p-bromo styrene, and a specific example thereof may be styrene.

According to an example of the present invention, the vinyl cyanide-based monomer for forming the vinyl cyanide-based monomer unit included in the virgin graft copolymer composition may be one or more selected from the group consisting of acrylonitrile, methacrylonitrile, (Z)-3-phenyl acrylonitrile, and α-chloro acrylonitrile, and a specific example thereof may be acrylonitrile.

According to an example of the present invention, the content of the conjugated diene-based polymer included in the virgin graft copolymer composition may be 40 to 80 wt%, preferably 50 to 70 wt%. If the above-described conditions are satisfied, the impact resistance of the virgin graft polymer composition may be further improved.

According to an example of the present invention, the content of the aromatic vinyl-based monomer unit included in the virgin graft copolymer composition may be 10 to 50 wt%, and preferably 20 to 40 wt%. If the above-described conditions are satisfied, the processability of the virgin graft copolymer composition may be further improved.

According to an example of the present invention, the content of the vinyl cyanide-based monomer unit included in the virgin graft copolymer composition may be 1 to 30 wt%, and preferably 5 to 25 wt%. If the above-described conditions are satisfied, the chemical resistance of the virgin graft polymer composition may be further improved.

According to an example of the present invention, the virgin graft copolymer composition may include two or more types of conjugated diene-based polymers having different average particle diameters. Specifically, the virgin graft copolymer composition may include a first conjugated diene-based polymer having a relatively small average particle diameter, a first graft copolymer including an aromatic vinyl-based monomer unit and a vinyl cyanide-based monomer unit, and a second conjugated diene-based polymer having a relatively large average particle diameter, a second graft copolymer including an aromatic vinyl-based monomer unit and a vinyl cyan-based monomer unit.

According to an example of the present invention, the first graft copolymer included in the virgin graft copolymer composition may have a core-shell structure including a core including a first conjugated diene-based polymer formed of the conjugated diene-based monomer unit, and a shell surrounding the core and formed of the aromatic vinyl-based monomer unit and the vinyl cyanide-based monomer unit. In addition, the second graft copolymer included in the virgin graft copolymer composition may have a core-shell structure including a core including a second conjugated diene-based polymer composed of the conjugated diene-based monomer unit, and a shell surrounding the core and composed of the aromatic vinyl-based monomer unit and the vinyl cyanide-based monomer unit.

Conventionally, a single conjugated diene-based polymer having a single average particle diameter was included in a resin composition including a recycled resin, but in the case of the present invention, in which two or more conjugated diene-based polymer s having different average particle diameters are included in a resin composition including a recycled resin, the number of rubber particles increases compared to a case in which a single conjugated diene-based polymer having a single average particle diameter is included, and thus the impact absorption efficiency increases.

According to an example of the present invention, the first conjugated diene-based polymer may have an average particle diameter of 75 nm to 220 nm, and for specific examples, the size may be 76 nm or more, 77 nm or more, 78 nm or more, 79 nm or more, or 80 nm or more, and may also be 216 nm or less, 212 nm or less, 208 nm or less, 204 nm or less, or 200 nm or less. If the above-described conditions are satisfied, the impact resistance of the virgin graft copolymer composition may be improved. If the average particle diameter of the first conjugated diene-based polymer is less than 75 nm, the aromatic vinyl-based monomer unit and the vinyl cyanide-based monomer unit are not grafted well, so that the impact resistance is reduced, and if the size exceeds 220 nm, there is no significant difference from the average particle diameter of the second conjugated diene-based polymer, so that the effect of improving the impact absorption efficiency disappears.

According to an example of the present invention, the second conjugated diene-based polymer may have an average particle diameter of 250 nm to 400 nm, and for specific examples, the diameter may be 260 nm or more, 270 nm or more, 280 nm or more, 290 nm or more, or 300 nm or more, and may also be 390 nm or less, 380 nm or less, 370 nm or less, 360 nm or less, or 350 nm or less. If the above-described conditions are satisfied, the impact resistance of the virgin graft copolymer composition may be improved.

According to an example of the present invention, the virgin graft copolymer composition may contain the first conjugated diene-based polymer in an amount of 8 wt% to 50 wt% with respect to the total content of the first conjugated diene-based polymer and the second conjugated diene-based polymer, and, as a specific example, may contain the first conjugated diene-based polymer in an amount of 8.5 wt% or more, 9 wt% or more, 9.5 wt% or more, or 10 wt% or more, and, further, in an amount of 48 wt% or less, 46 wt% or less, 44 wt% or less, or 43 wt% or less with respect to the total content of the first conjugated diene-based polymer and the second conjugated diene-based polymer . When the above-described range is satisfied, the impact strength, tensile strength, and flow index of the resin composition may all be improved.

According to an example of the present invention, when the cross-section of an impact specimen of a resin composition including the virgin graft copolymer composition and the recycled resin is observed with a TEM image, cavitation is observed inside each of the first graft copolymer and the second graft copolymer derived from the virgin graft copolymer composition, but no cavity may be observed inside the graft copolymer derived from the recycled resin. The impact specimen may mean a specimen in which an impact is applied to the resin composition.

Specifically, when stress is applied to the resin composition, the first graft copolymer and the second graft copolymer derived from the virgin graft copolymer composition, stress is concentrated on each of the first graft copolymer and the second graft copolymer, and accordingly, the monomer chains (physical and chemical bonds) inside them may be broken, forming a cavity. However, in the case of the graft copolymer derived from the recycled resin, since the monomer chain inside the graft copolymer has already been decomposed by mechanical heat treatment during the regeneration process before the recycled resin is included in the resin composition, even if stress is applied to the resin composition, a cavity may not be formed inside the graft copolymer.

According to an example of the present invention, when an impact is applied to the resin composition including the virgin graft copolymer composition, a cavity is formed inside each of the first graft copolymer and the second graft copolymer included in the resin composition, thereby relieving the surrounding stress, so that the impact strength of the resin composition may be improved.

According to an example of the present invention, the resin composition may contain the virgin graft copolymer composition in an amount of 10 parts by weight to 18 parts by weight, with respect to 100 parts by weight of the recycled resin, the virgin graft copolymer composition, and the virgin non-graft copolymer, and as a specific example, may contain the virgin graft copolymer composition in an amount of 11 parts by weight or more, 12 parts by weight or more, or 13 parts by weight or more, and further, in an amount of 17 parts by weight or less, 16 parts by weight or less, or 15 parts by weight or less. When the above-described range is satisfied, the impact strength, tensile strength, and flow index of the resin composition may all be improved.

### 3. Virgin non-graft polymer

According to an example of the present invention, a virgin non-graft copolymer is a non-graft copolymer that has never been used, and is a component that improves the tensile strength and processability of a resin composition.

According to an example of the present invention, the virgin non-graft copolymer is a non-grafted copolymer, and may include an aromatic vinyl-based monomer unit and a vinyl cyanide-based monomer unit.

According to an example of the present invention, an aromatic vinyl-based monomer for forming the aromatic vinyl-based monomer unit included in the virgin non-graft copolymer may be at least one selected from the group consisting of α-methyl styrene, α-ethyl styrene, p-methyl styrene, 2,4-dimethyl styrene, styrene, p-fluoro styrene, p-chloro styrene, and p-bromo styrene, and a specific example thereof may be styrene.

According to an example of the present invention, the vinyl cyanide-based monomer for forming the vinyl cyanide-based monomer unit included in the virgin non-graft copolymer may be at least one selected from the group consisting of acrylonitrile, methacrylonitrile, (Z)-3-phenyl acrylonitrile, and α-chloro acrylonitrile, and a specific example thereof may be acrylonitrile.

According to an example of the present invention, the content of the aromatic vinyl-based monomer unit included in the virgin non-graft copolymer may be 60 to 90 wt%, preferably 65 to 85 wt%. If the above-described conditions are satisfied, the processability of the virgin graft copolymer may be further improved.

According to an example of the present invention, the content of the vinyl cyanide-based monomer unit included in the virgin non-graft copolymer may be 10 to 40 wt%, preferably 15 to 35 wt%. If the above-described conditions are satisfied, the chemical resistance of the diene graft polymer may be further improved.

### 4. Another additive

According to an example of the present invention, the resin composition may further include another additive. The additive may be at least one selected from the group consisting of an activator, an antioxidant, a light stabilizer, a hydrolysis stabilizer, a release agent, a pigment, an antistatic agent, a conductive agent, an electromagnetic shielding agent, a magnetization agent, a mineral filler, a crosslinking agent, an antibacterial agent, a processing aid, a metal deactivator, a suppressor, an antifriction and antiwear agent, and a coupling agent.

The additive may be used without limitation as long as the additive is used in the technical field of the present invention, and a person skilled in the art may select the additive included in the present invention according to the purpose.

### <Method for producing resin composition>

The present invention provides a method for producing a resin composition.

A method for producing a resin composition according to an example of the present invention includes: performing graft polymerization to prepare a virgin graft copolymer composition in the presence of a first conjugated diene-based polymer latex including a first conjugated diene-based polymer having an average particle diameter of 75 nm to 220 nm and a second conjugated diene-based polymer latex including a second conjugated diene-based polymer having an average particle diameter of 250 nm to 400 nm; and mixing the prepared virgin graft copolymer composition, a recycled resin, and a virgin non-graft copolymer, wherein the virgin graft copolymer is prepared by including the first conjugated diene-based polymer in an amount of 8 wt% to 50 wt% with respect to the total content of the first conjugated diene-based polymer and the second conjugated diene-based polymer .

Hereinafter, examples of the present invention will be described in detail so that those with ordinary knowledge in the technical field to which the present invention pertains can easily implement the invention. However, the present invention may be implemented in various different forms and is not limited to the examples described herein.

### Example 1

### <Production of virgin graft copolymer composition>

Into a nitrogen-exchanged polymerization reactor (autoclave), 55 parts by weight (based on solids) of polybutadiene rubber latex as a large-diameter rubber latex having an average particle diameter of 320 nm and a gel content of 70%, 10 parts by weight (based on solids) of polybutadiene rubber latex as a small-diameter rubber latex having an average particle diameter of 100 nm and a gel content of 90%, 90 parts by weight of ion-exchange water, 7.0 parts by weight of styrene as a monomer, and 3.0 parts by weight of acrylonitrile were fed, and the reactor temperature was maintained at 50°C, and then, 0.05 parts by weight of cumene hydroperoxide, 0.09 parts by weight of sodium pyrophosphate, 0.12 parts by weight of dextrose, and 0.002 parts by weight of ferrous sulfide were fed in batches to initiate the reaction.

At the start of polymerization, a mixture of 17.5 parts by weight of styrene, 7.5 parts by weight of acrylonitrile, 0.2 parts by weight of tertiary dodecyl mercaptan, and 0.12 parts by weight of cumene hydroperoxide was continuously fed into the reactor for 2 hours, and the temperature was raised to 75°C. After the continuous feeding was completed, 0.06 parts by weight of cumene hydroperoxide, 0.04 parts by weight of sodium pyrophosphate, 0.06 parts by weight of dextrose, and 0.001 parts by weight of ferrous sulfide were fed, stirred at 80°C for 30 minutes, and maintained for 30 minutes to complete the reaction.

To the latex for which the reaction was completed, 0.5 parts by weight of an antioxidant (winstay-L/IR1076=0.8/0.2) emulsion was added, and a magnesium sulfate aqueous solution was added to coagulate, and then a virgin graft copolymer composition powder was obtained by dehydrating, washing, and drying.

### <Production of resin composition>

A recycled resin (manufactured by Daeil Industrial Resin Company) with an Izod impact strength (kg·cm/cm, 1/4") of 9 kg·cm/cm and a melt flow index (g/10 min) of 30 g/10 min was prepared as a copolymer of a recycled vinyl cyanide compound-conjugated diene compound-aromatic vinyl compound, and a virgin non-graft copolymer (manufactured by LG Chemical Company, product name: 97HC) with a weight average molecular weight of 165,000 g/mol and produced by polymerizing 70 wt% of styrene and 30 wt% of acrylonitrile was prepared.

75 parts by weight of the recycled resin, 13 parts by weight of the virgin graft polymer, 12 parts by weight of the virgin non-graft copolymer, and ethylene bissteamide (EBA) as an active agent and other additives (heat stabilizer, pigment) were added to a mixer and mixed, and then an extruder was used at 230°C to obtain a resin composition in the form of pellets.

### Example 2

A resin composition was obtained by the same method as in example 1, except that 48 parts by weight of large-diameter rubber latex and 7 parts by weight of small-diameter rubber latex were used in <Production of virgin graft copolymer composition> of example 1.

### Example 3

A resin composition was obtained by the same method as in example 1, except that 40 parts by weight of large-diameter rubber latex and 30 parts by weight of small-diameter rubber latex were used in <Production of virgin graft copolymer composition> of example 1.

### Example 4

A resin composition was obtained by the same method as in example 1, except that in place of 10 parts by weight (based on solid content) of polybutadiene rubber latex having an average particle diameter of 100 nm and a gel content of 90%, 10 parts by weight (based on solid content) of polybutadiene rubber latex having an average particle diameter of 80 nm and a gel content of 90% was used as a small-diameter rubber latex in <Production of virgin graft copolymer composition> of example 1.

### Example 5

A resin composition was obtained by the same method as in example 1, except that in place of 10 parts by weight (based on solid content) of polybutadiene rubber latex having an average particle diameter of 100 nm and a gel content of 90%, 10 parts by weight (based on solid content) of polybutadiene rubber latex having an average particle diameter of 200 nm and a gel content of 90% was used as a small-diameter rubber latex in <Production of virgin graft copolymer composition> of example 1.

### Example 6

A resin composition was obtained by the same method as in example 1, except that 40 parts by weight of large-diameter rubber latex and 30 parts by weight of small-diameter rubber latex were used in <Production of virgin graft copolymer composition> of example 1, and 85 parts by weight of recycled resin, 13 parts by weight of virgin graft polymer, 2 parts by weight of virgin vinyl-based non-graft copolymer, and ethylene bissteamide (EBA) as an active agent and other additives (heat stabilizer, pigment) were added to a mixer and mixed, and then an extruder was used at 230°C to obtain a resin composition in the form of pellets in <Production of resin composition> of example 1.

### Comparative example 1

A resin composition was obtained by the same method as example 1, except that 65 parts by weight of large-diameter rubber latex was used and no small-diameter rubber latex was used in <Production of virgin graft copolymer composition> of example 1.

### Comparative example 2

A resin composition was obtained by the same method as example 1, except that 60 parts by weight of large-diameter rubber latex was used and 5 parts by weight of small-diameter rubber latex was used in <Production of virgin graft copolymer composition> of example 1.

### Comparative example 3

A resin composition was obtained by the same method as example 1, except that 30 parts by weight of large-diameter rubber latex was used and 35 parts by weight of small-diameter rubber latex was used in <Production of virgin graft copolymer composition> of example 1.

### Comparative example 4

A resin composition was obtained by the same method as in example 1, except that in place of 10 parts by weight (based on solid content) of polybutadiene rubber latex having an average particle diameter of 100 nm and a gel content of 90%, 10 parts by weight of polybutadiene rubber latex having an average particle diameter of 70 nm and a gel content of 90% was used as a small-diameter rubber latex in <Production of virgin graft copolymer composition> of example 1.

### Comparative example 5

A resin composition was obtained by the same method as in example 1, except that in place of 10 parts by weight (based on solid content) of polybutadiene rubber latex having an average particle diameter of 100 nm and a gel content of 90%, 10 parts by weight of polybutadiene rubber latex having an average particle diameter of 230 nm and a gel content of 90% was used as a small-diameter rubber latex in <Production of virgin graft copolymer composition> of example 1.

### Comparative example 6

A resin composition was obtained by the same method as in example 6, except that 65 parts by weight of large-diameter rubber latex was used and no small-diameter rubber latex was used in <Production of virgin graft copolymer composition> of example 1, and 85 parts by weight of a recycled resin, 13 parts by weight of a virgin graft polymer, 2 parts by weight of a virgin vinyl-based non-graft copolymer, and ethylene bissteamide (EBA) as an active agent and other additives (heat stabilizer, pigment) were added to a mixer and mixed, and then an extruder was used at 230°C to obtain a resin composition in the form of pellets in <Production of resin composition> of example 1.

### Comparative example 7

A resin composition was obtained by the same method as in example 1, except that 65 parts by weight of large-diameter rubber latex was used and no small-diameter rubber latex was used in <Production of virgin graft copolymer composition> of example 1, and 60 parts by weight of a recycled resin, 13 parts by weight of a graft polymer, 27 parts by weight of a virgin vinyl-based non-graft copolymer, and ethylene bissteamide (EBA) as an active agent and other additives (heat stabilizer, pigment) were added to a mixer and mixed, and then an extruder was used at 230°C to obtain a resin composition in the form of pellets in <Production of resin composition> of example 1.

### Comparative example 8

A resin composition was obtained by the same method as in example 1, except that 65 parts by weight of large-diameter rubber latex was used and no small-diameter rubber latex was used in <Production of virgin graft copolymer composition> of example 1, and 60 parts by weight of a recycled resin, 20 parts by weight of a graft polymer, 20 parts by weight of a virgin vinyl-based non-graft copolymer, and ethylene bissteamide (EBA) as an active agent and other additives (heat stabilizer, pigment) were added to a mixer and mixed, and then an extruder was used at 230°C to obtain a resin composition in the form of pellets in <Production of resin composition> of example 1.

### Comparative example 9

A resin composition was obtained by the same method as in example 1, except that 65 parts by weight of large-diameter rubber latex was used and no small-diameter rubber latex was used in <Production of virgin graft copolymer composition> of example 1, and no virgin vinyl-based non-graft copolymer was added and 90 parts by weight of a recycled resin, 10 parts by weight of a graft polymer, and ethylene bissteamide (EBA) as an active agent and other additives (heat stabilizer, pigment) were added to a mixer and mixed, and then an extruder was used at 230°C to obtain a resin composition in the form of pellets in <Production of resin composition> of example 1.

### Reference example 1

As a copolymer of a recycled vinyl cyanide compound-conjugated diene compound-aromatic vinyl compound, a recycled resin (produced by Daiichi Industrial Resin Company) having an Izod impact strength (kg·cm/cm, 1/4") of 9 kg·cm/cm and a melt flow index (g/10 min) of 30 g/10 min was prepared.

100 parts by weight of the recycled resin, ethylene bisstamide (EBA) as an active agent, and other additives (heat stabilizer, pigment) were added to a mixer and mixed, and then an extruder was used at 230°C to obtain a resin composition in the form of pellets.

### Reference example 2

A resin composition was obtained by performing the same method as in example 1, except that 65 parts by weight of small-diameter rubber latex was used in place of large-diameter rubber latex in <Production of virgin graft copolymer composition> of example 1.

### Experimental example 1

The thermoplastic resin compositions according to examples 1 to 6 and comparative examples 1 to 9 were extruded and injected to produce specimens, and the physical properties of the specimens were measured by methods described below, and the results are shown in Tables 1 to 3 below.
* Izod impact strength (kg·cm/cm, 1/4"): Measured according to ASTM D256. In the present invention, when the Izod impact strength is 17.0 kg·cm/cm or more, it is considered that the impact resistance is excellent.
* Tensile strength (kg/cm²): Measured according to ASTM D638. In the present invention, when the tensile strength is 395 kg/cm² or more, it is considered that the tensile strength is excellent.
* Flow index (Melt Flow Index, g/10 min): Measured under the conditions of 220 °C and 10 kg according to ASTM D1238. In the present invention, when the flow index is 26.0 g/10 min or higher, it is considered that processability is excellent.

### Experimental example 2

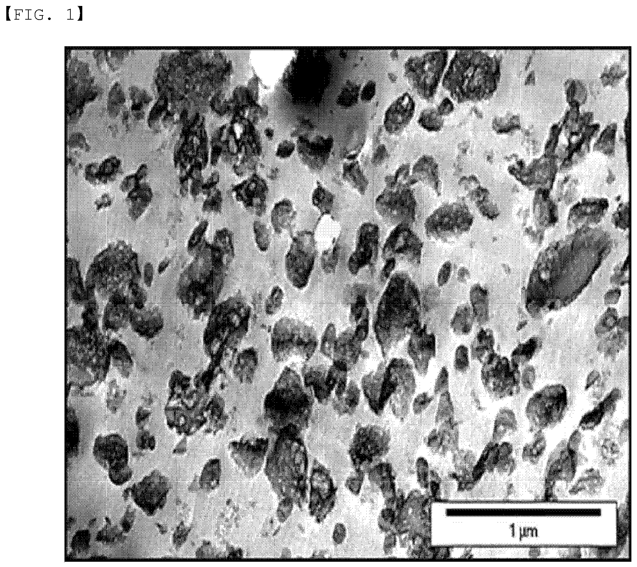

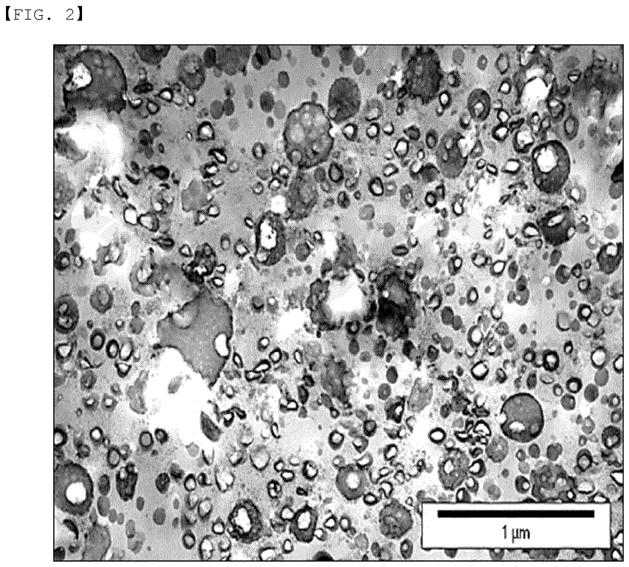

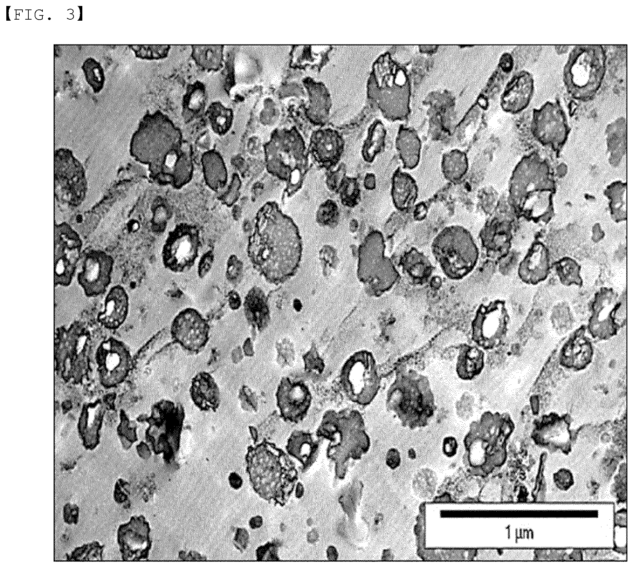

Each of the thermoplastic resin compositions according to reference example 1, reference example 2, and comparative example 1 was extruded and injected to produce specimens, and a notch was formed on each specimen, and the specimen was cut in half through the notch to form an impact specimen. The impact specimen was cut into a 1 cm triangular block, and then the block was trimmed to a size of 100 *µ*m * 200 *µ*m using an ultra-microtome (Leica Company product name: FC7/UC5) at room temperature, and then placed in a container containing OsO4 crystals, sealed well, and left at room temperature for about 2 days to perform dyeing. Thereafter, the dyed block was washed with distilled water, and the block was sectioned at a thickness of 80 nm and a speed of 1 mm/s using an ultra-microtome (Leica Company product name: FC7/UC5) at room temperature to obtain a thin section. A TEM image was observed for the thin section using a TEM analysis device (Jeol Company, product name JEM-1400) at 120 kV. The observed TEM images are shown in FIGS. 1 to 3.

**[Table 1]**

| | Example | | | | | | |
|---|---|---|---|---|---|---|---|
| | 1 | 2 | 3 | 4 | 5 | 6 | |
| Recycled resin (part by weight) | 75 | 75 | 75 | 75 | 75 | 85 | |
| Virgin graft copolym er | Small diameter rubber particle diameter | 100nm | 100nm | 100nm | 80nm | 200nm | 100nm |
| | Large diameter rubber particle diameter | 320nm | 320nm | 320nm | 320nm | 320nm | 320nm |
| | Small diameter rubber particle ratio | 15.38 % | 12.72 % | 42.86 % | 15.38 % | 15.38 % | 42.86 % |
| | Content (part by weight) | 13 | 13 | 13 | 13 | 13 | 13 |
| Virgin non-graft copolymer (part by weight) | | 12 | 12 | 12 | 12 | 12 | 2 |
| Thermop lastic resin composi tion | Impact strength (1/4") | 17.8 | 17.1 | 20.3 | 18.5 | 18 | 19 |
| | Tensile strength | 402 | 395 | 420 | 405 | 400 | 395 |
| | Flow index | 28.5 | 28.8 | 26.0 | 28.0 | 28.8 | 30.2 |

**[Table 2]**

| | | Comparative example | | | | | |
|---|---|---|---|---|---|---|---|
| | | 1 | 2 | 3 | 4 | 5 | 6 |
| Recycled resin (part by weight) | | 75 | 75 | 75 | 75 | 75 | 85 |
| Virgin graft copolym er | Small diameter rubber particle diameter | - | 100nm | 100nm | 70nm | 230nm | - |
| | Large diameter rubber particle diameter | 320nm | 320nm | 320nm | 320nm | 320nm | 320nm |
| | Small diameter rubber particle ratio | 0% | 7.69% | 53.85 % | 15.38 % | 15.38 % | 0% |
| | Content (part by weight) | 13 | 13 | 13 | 13 | 13 | 13 |
| Virgin non-graft copolymer (part by weight) | | 12 | 12 | 12 | 12 | 12 | 2 |
| Thermop lastic resin | Impact strength (1/4") | 15.8 | 16.0 | 20.1 | 14.3 | 13.2 | 15.0 |
| | Tensile strength | 390 | 390 | 423 | 405 | 393 | 365 |
| composi tion | Flow index | 29.1 | 28.5 | 24.2 | 27.0 | 29.0 | 30.9 |

**[Table 3]**

| | | Comparative example | | |
|---|---|---|---|---|
| | | 7 | 8 | 9 |
| Recycled resin (part by weight) | | 60 | 60 | 90 |
| Virgin graft copolym er | Small diameter rubber particle diameter | - | - | - |
| | Large diameter rubber particle diameter | 320nm | 320nm | 320nm |
| | Small diameter rubber particle ratio | 0% | 0% | 0% |
| | Content (part by weight) | 13 | 20 | 10 |
| Virgin non-graft copolymer (part by weight) | | 27 | 20 | 0 |
| Thermop lastic resin composi tion | Impact strength (1/4") | 14.7 | 19.5 | 14.9 |
| | Tensile strength | 454 | 370 | 374 |
| | Flow index | 24.2 | 25.2 | 33.0 |

Referring to Tables 1 to 3, it was confirmed that the resin compositions of examples 1 to 6, in which the particle diameter of the small-diameter conjugated diene-based polymer was 75 nm to 220 nm, the particle diameter of the large-diameter conjugated diene-based polymer was 250 nm to 400 nm, and the ratio of the small-diameter conjugated diene-based polymer was 8 wt% to 50 wt% with respect to the total content of the small-diameter conjugated diene-based polymer and the large-diameter conjugated diene-based polymer, had excellent impact strength, tensile strength, and flow index.

In addition, referring to FIGS. 1 to 3, in the case of reference example 1, in which the virgin graft copolymer composition was not included, cavitation was not formed inside the graft copolymer in the resin composition, but in the case of reference example 2 and comparative example 1, in which the virgin graft copolymer composition was included, it was confirmed that cavitation was formed inside the virgin graft copolymer in each resin composition and observed as white.

It was confirmed that the resin compositions of comparative examples 1 and 6, which do not include a small-diameter conjugated diene-based polymer, have significantly lower impact strengths compared to the resin compositions of examples 1 to 6.

It was confirmed that the resin composition of comparative example 2, in which the proportion of the small-diameter conjugated diene-based polymer is less than 8 wt% with respect to the total content of the small-diameter conjugated diene-based polymer and the large-diameter conjugated diene-based polymer, has significantly lower impact strengths compared to the resin compositions of examples 1 to 6.

It was confirmed that the resin composition of comparative example 3, in which the proportion of the small-diameter conjugated diene-based polymer exceeds 50 wt% with respect to the total content of the small-diameter conjugated diene-based polymer and the large-diameter conjugated diene-based polymer, has significantly lower flow indexes compared to the resin compositions of examples 1 to 6.

It was confirmed that the resin composition of comparative example 4, in which the particle diameter of the small-diameter conjugated diene-based polymer was less than 75 nm, and the resin composition of comparative example 5, in which the particle diameter exceeded 220 nm, had significantly lower impact strength than the resin compositions of examples 1 to 6.

Meanwhile, the resin compositions of comparative examples 7 to 9 differ only in the contents of the recycled resin, virgin graft copolymer, and virgin non-graft copolymer compared to the thermoplastic resin compositions of comparative examples 1 and 6, wherein the resin composition of comparative example 7, in which the recycled resin content is less than 70 parts by weight and the virgin non-graft content exceeds 15 parts by weight, has improved tensile strength, but its impact strength and flow index are significantly reduced, the resin composition of comparative example 8, in which the recycled resin content is less than 70 parts by weight and the virgin graft copolymer content exceeds 18 parts by weight, has secured impact strength, but its flow index and tensile strength are significantly reduced, and the resin composition of comparative example 9, in which the recycled resin content exceeds 88 parts by weight and does not include the virgin non-graft copolymer, has significantly reduced impact strength and tensile strength.

## Claims

1. A resin composition comprising a recycled resin, a virgin graft copolymer composition, and a virgin non-graft copolymer, wherein the virgin graft copolymer composition comprises:
a first graft copolymer comprising a first conjugated diene-based polymer having an average particle diameter of 75 nm to 220 nm; and
a second graft copolymer comprising a second conjugated diene-based polymer having an average particle diameter of 250 nm to 400 nm, and
wherein the virgin graft copolymer composition comprises the first conjugated diene-based polymer in an amount of 8 wt% to 50 wt% with respect to the total content of the first conjugated diene-based polymer and the second conjugated diene-based polymer.

2. The resin composition of claim 1, wherein with respect to 100 parts by weight of the content of the recycled resin, the virgin graft copolymer composition and the virgin non-graft copolymer, the recycled resin is contained in an amount of 70 parts by weight to 88 parts by weight.

3. The resin composition of claim 1, wherein with respect to 100 parts by weight of the recycled resin, the virgin graft copolymer composition and the virgin non-graft copolymer, the recycled resin is contained in an amount of 75 parts by weight to 85 parts by weight.

4. The resin composition of claim 1, wherein with respect to 100 parts by weight of the recycled resin, the virgin graft copolymer composition and the virgin non-graft copolymer, the virgin graft copolymer is contained in an amount of 10 parts by weight to 18 parts by weight, and the virgin non-graft copolymer is contained in an amount of 1 part by weight to 15 parts by weight.

5. The resin composition of claim 1, wherein the virgin graft copolymer composition comprises the first conjugated diene-based polymer in an amount of 10 wt% to 43 wt% with respect to the total content of the first conjugated diene-based polymer and the second conjugated diene-based polymer.

6. The resin composition of claim 1, wherein the average particle diameter of the first conjugated diene-based polymer is 78 nm to 208 nm.

7. The resin composition of claim 1, wherein the recycled resin has an Izod impact strength of 7 kg·cm/cm to 12 kg·cm/cm as measured according to ASTM D256, and a flow index of 25 g/10 min to 35 g/10 min as measured according to ASTM D1238.

8. The resin composition of claim 1, wherein the resin composition has an Izod impact strength of 17.0 kg·cm/cm or more as measured according to ASTM D256, a tensile strength of 395 kg/cm² or more as measured according to ASTM D638, and a flow index of 26.0 g/10 min or more as measured under the conditions of 220 °C and 10 kg according to ASTM D1238.

9. The resin composition of claim 1, wherein the non-graft copolymer comprises an aromatic vinyl-based monomer unit and a vinyl cyanide-based monomer unit, and the first graft copolymer and the second graft copolymer further comprise an aromatic vinyl-based monomer unit and a vinyl cyanide-based monomer unit, respectively.

10. The resin composition of claim 1, wherein when the cross-section of an impact specimen of the resin composition is observed with a TEM image, cavitation is observed inside the first graft copolymer and the second graft copolymer.

11. A method for producing a resin composition, the method comprising:
performing graft polymerization to prepare a virgin graft copolymer composition in the presence of a first conjugated diene-based polymer latex including a first conjugated diene-based polymer having an average particle diameter of 75 nm to 220 nm and a second conjugated diene-based polymer latex including a second conjugated diene-based polymer having an average particle diameter of 250 nm to 400 nm; and
mixing the prepared virgin graft copolymer composition, a recycled resin, and a virgin non-graft copolymer,
wherein the virgin graft copolymer is prepared by including the first conjugated diene-based polymer in an amount of 8 wt% to 50 wt% with respect to the total content of the first conjugated diene-based polymer and the second conjugated diene-based polymer.
